# FASCICULE DE BREVET EUROPEEN

(11) **EP 0 794 150 B1**
(45) Date de publication et mention de la délivrance du brevet: **31.05.2000**
(21) Numéro de dépôt: 97400489.7
(22) Date de dépôt: 04.03.1997
(51) Int. Cl.: C01B 3/04

(54) **Procédé et dispositif de craquage de l'ammoniac présent dans un gaz contenant de l'hydrogéne sulfuré**
Verfahren und Vorrichtung zum Kracken von Ammoniak in einem Schwefelwasserstoff enthaltenden Gas
Process and apparatus for the cracking of the ammoniac present in a gas containing hydrogen sulphide

(30) Priorité: 08.03.1996 FR 9602909
(43) Date de publication de la demande: 10.09.1997
(73) Titulaire: INSTITUT FRANCAIS DU PETROLE, 92852 Rueil-Malmaison Cedex (FR)
(72) Inventeur: Busson, Christian, 69260 Charbonnière (FR); Nietsch Thomas, 69002 Lyon (FR)

(56) Documents cités:
- DE-A- 3 209 858
- US-A- 3 661 507
- US-A- 3 773 912
- US-A- 4 273 748
- US-A- 4 374 105

## Description

L'invention concerne un procédé et un dispositif de craquage catalytique d'ammoniac contenu dans un fluide gazeux ou liquide qui comprend de l'hydrogène sulfuré. Elle concerne aussi son utilisation dans un procédé ou dispositif d'élimination de l'hydrogène sulfuré.

Il est bien connu que le pétrole peut contenir des molécules azotées type indole ou pyridine. Lors des opérations d'hydrotraitement, l'azote contenu dans ces molécules est transformé en ammoniac (NH₃). Cet ammoniac est éliminé par lavage à l'eau qui, par suite de la présence d'hydrogène sulfuré (H₂S), fournit une solution aqueuse de sulfure d'ammonium. Jusqu'à présent, la solution aqueuse, après avoir été concentrée en H₂S et NH₃ par entraînement à la vapeur, était envoyie à l'incinération. Ceci n'est plus admis actuellement pour des raisons qui touchent à l'environnement (pollution par SO₂).

Actuellement, les raffineurs envoient ce produit dans l'étage thermique d'une unité Claus. Si l'ammoniac est mal brûlé, ce qui est souvent le cas, des sels solides comme les sulfures ou sulfites d'ammonium se forment et entraînent des bouchages dans les parties les plus froides de l'unité Claus, notamment dans les condenseurs à soufre. Pour bien brûler l'ammoniac, il faut un mélange homogène de l'ammoniac avec de l'air et une température de flamme élevée. Cependant, on constate la formation d'oxydes d'azote qui favorise l'oxydation de l'anhydride sulfureux (SO₂), en anhydride sulfurique (SO₃). Le catalyseur Claus alors se sulfate et on observe une corrosion sur les parties froides de l'unité.

Des améliorations ont été apportées par l'emploi de systèmes de combustion plus complexes tels qu'un brûleur unique avec dérivation d'une partie de H₂S, ou deux brûleurs, l'un pour H₂S et l'autre pour le gaz contenant de l'ammoniac. Ces innovations présentent le désavantage d'un coût élevé et d'une plus grande difficulté à régler un rapport H₂S/SO₂ égal à 2, nécessaire pour atteindre un rendement élevé de l'unité Claus.

D'autre part, la combustion d'ammoniac a un effet direct sur la conversion de l'unité Claus :
- effet de dilution en raison de l'augmentation de la quantité d'air injecté ;
- effet défavorable sur l'équilibre thermodynamique en raison de la production de vapeur d'eau.

Ainsi, la présence de 18,7 % en volume d'ammoniac dans la charge (H₂S) d'une unité Claus entraîne une augmentation du débit de gaz rejeté (en majorité de l'azote) de 53,7 % et une augmentation de l'émission de produits soufrés de 47,8 % par rapport au fonctionnement de l'unité en présence d'une même quantité de H₂S exempt d'ammoniac (B. G. Goar Hydrocarbon, Processing July 1974, p 129 à p 132).

Pour éviter ces inconvénients, il a été étudié une voie plus intéressante consistant à craquer l'ammoniac en azote et hydrogène.

Par exemple, les brevets US4273748 A et 4273749 A décrivent l'utilisation de catalyseurs à base de fer ou de nickel pour décomposer l'ammoniac issu de la gazéification du charbon. Toutefois, l'hydrogène sulfuré présent empoisonne le catalyseur. Ceci oblige à opérer en deux étapes :
- dans une première étape, le gaz est passé sur un catalyseur à une température de 450 à 700 °C pour enlever sensiblement tout l'hydrogène sulfuré ; le catalyseur ayant été sulfuré doit être régénéré par oxydation ;
- dans une deuxième étape, le gaz épuré est débarrassé de sensiblement tout l'ammoniac en passant sur un catalyseur à une température atteignant 900 °C.

Le brevet US4374105 A décrit l'utilisation de l'oxyde de zinc pour décomposer l'ammoniac en présence de H₂S. Ce catalyseur ne permet pas une conversion totale de NH₃ et par ailleurs, il nécessite aussi une étape de régénération par oxydation.

Enfin, le brevet allemand DE 320 9858 A décrit un procédé dans lequel on effectue la dissociation catalytique de l'ammoniac en présence d'hydrogène sulfuré sur un catalyseur à base de nickel à des températures comprises entre 1000 et 1200 °C.

Selon ce brevet, l'obtention de ces hautes températures se fait par combustion réductrice du gaz à traiter avec appoint de gaz de fuel. Le fait de mélanger le gaz à traiter contenant l'ammoniac avec du gaz de fuel et de l'air puis d'effectuer une combustion réductrice de l'ensemble offre de sérieux inconvénients du point de vue du traitement de l'hydrogène sulfuré résiduel en aval de l'étape de dissociation catalytique de l'ammoniac :
- la combustion du gaz de fuel produit de grandes quantités d'eau, ce qui fait que la totalité du gaz sortant du réacteur de dissociation de l'ammoniac ne peut pas être admise telle quelle dans l'unité Claus. Dans le brevet allemand, environ les deux-tiers de ce gaz doivent être refroidis pour permettre la condensation de cette eau de combustion dans la colonne de distribution. En outre l'eau ainsi produite par condensation peut contenir certaines impuretés (traces d'ammoniac non dissocié, traces d'hydrogène sulfuré,...) rendant impossible son rejet dans l'environnement sans traitement préalable ;
- la combustion de gaz de fuel (généralement constitué de méthane et d'autres hydrocarbures légers) produit de grandes quantités de dioxyde de carbone qui va réagir avec l'hydrogène sulfuré pour former de l'oxysulfure de carbone et du disulfure de carbone en quantités importantes compte-tenu des conditions régnant au niveau de la zone catalytique de dissociation de l'ammoniac (température et pression partielle d'hydrogène sulfuré élevées). Or il est bien connu que ces produits sont particulièrement difficiles à hydrolyser ensuite au niveau des lits catalytiques de l'unité Claus ;
- enfin, la présence de comburant dans la combustion entraîne la présence d'azote que l'on ne peut condenser et qui contribue à diluer le mélange de gaz.

Un des objets de l'invention est de remédier aux inconvénients de l'art antérieur. Un autre objet est de rejeter le moins possible de polluants toxiques dans l'atmosphère. Un autre objet est de maintenir le catalyseur en bon état d'utilisation le plus longtemps possible en évitant de le régénérer. Un autre objet concerne l'utilisation de fours thermiques catalytiques, en matière céramique, spécialement adaptés au craquage catalytique d'ammoniac contenu dans un gaz comprenant de l'hydrogène sulfuré.

Plus précisément, l'invention concerne un procédé de craquage catalytique d'ammoniac présent dans un fluide contenant de l'hydrogène sulfuré, dans lequel on introduit le fluide dans une zone réactionnelle comportant un catalyseur approprié et on récupère un effluent de craquage catalytique. La température de ladite zone réactionnelle est en général comprise entre de 1 000 et 1 400 °C et elle est obtenue par des moyens de chauffage ou d'échange de chaleur contenus à l'intérieur de la zone réactionnelle.

En aucun cas, il n'y aura de mélange des gaz à traiter avec un fluide apportant la chaleur nécessaire aux réactions de dissociation.

Le procédé selon l'invention où seul le fluide est introduit dans la zone réactionnelle nécessite un équipement simple et permet l'envoi direct à l'unité Claus de la totalité du gaz sortant du réacteur de dissociation de l'ammoniac sans dilution des gaz, contrairement au brevet DE 320 9858 A. Cela contribue à améliorer le rendement de la conversion.

De préférence, la température de la zone réactionnelle est de 1 150 à 1 250 °C.

Selon une autre caractéristique, la pression dans la zone réactionnelle est généralement celle du fluide y entrant et qui est mis en contact avec le catalyseur.
Avantageusement, cette pression peut être comprise entre 1,05 et 5 bars absolus.

Selon une autre caractéristique de l'invention, on peut injecter le fluide à un débit tel que le temps de séjour dans la zone réactionnelle catalytique est compris entre 0,1 et 100 secondes et de préférence compris entre 0,5 et 10 secondes. Le temps de séjour est d'autant plus court que la température finale est plus élevée.

Dans ces conditions opératoires, le taux de conversion de l'ammoniac est supérieur à 99,5 % et reste supérieur à 99,5 % pendant une très longue période de temps, par exemple pendant au moins 2 000 heures.

Le taux de conversion d'hydrogène sulfuré est et reste généralement inférieur à 10 %, avantageusement inférieur à 4 % et de préférence inférieur à 2 %.

Les charges traitées peuvent être liquides ou gazeuses. Généralement, elles sont sous forme aqueuse contenant NH₄OH et H₂S ou sous forme gazeuse contenant H₂S, NH₃, et éventuellement de la vapeur d'eau. Ces charges peuvent être au moins un effluent choisi dans le groupe formé par les effluents de tête d'un dispositif d'entraînement à la vapeur d'une eau résiduaire de raffinerie, les effluents de gazéification de charbon et les biogaz.

Les effluents de cokerie (gaz de cokerie) contenant en plus de l'acide cyanhydrique peuvent également être traités selon le procédé et le dispositif de la présente invention. En présence de vapeur d'eau, la dissociation de l'acide cyanhydrique conduit selon des réactions connues à la formation d'azote, d 'hydrogène et de monoxyde de carbone puis de dioxyde de carbone. L'hydrogène obtenu peut contribuer à améliorer le rendement de la conversion de l'unité Claus, en aval.

Après élimination de l'ammoniac, l'hydrogène sulfuré peut alors être détruit de manière conventionnelle. Par exemple, dans le cas du traitement d'un effluent de tête d'un dispositif d'entraînement à la vapeur d'une eau résiduaire de raffinerie, le gaz après craquage peut être envoyé tout naturellement dans l'étage thermique d'une unité Claus. Dans le cas où il n'y a pas d'unité Claus disponible, on peut utiliser tout procédé d'épuration de gaz contenant H₂S, par exemple par absorption chimique.

Le catalyseur utilisé peut être choisi dans le groupe formé par au moins un métal noble du groupe VIII, au moins un métal du groupe VII B, au moins un métal du groupe VII B en mélange avec au moins un métal du groupe VIII, au moins un métal du groupe VI B, au moins un métal non noble du groupe VIII en mélange avec au moins un métal du groupe VI B et au moins un métal non noble du groupe VIII avec au moins un métal noble du groupe VIII.
De préférence, on peut utiliser le cobalt ou le nickel en mélange avec le molybdène ou le tungstène.

Parmi les métaux du groupe VII B, on préférera le Rhénium seul ou associé aux métaux nobles du groupe VIII : Ru, Rh, Pd, Os, Ir, Pt, avantageusement Re-Pt.

D'autres catalyseurs, comme celui décrit dans le brevet EP-A-27069 incorporé comme référence, contenant en outre du cérium, peuvent être utilisés.

Le catalyseur peut être sous forme métallique (fil de W, Mo ou Pt par exemple) supporté (alumine, silice, silices-alumines, oxyde de titane, oxyde de zirconium, cordiérite), pastillé ou extrudé (oxydes ou sulfures de Co-Mo par exemple).

Selon un premier mode de réalisation, la zone réactionnelle est habituellement un réacteur contenant un catalyseur permettant d'atteindre de très hautes températures, de préférence un réacteur en matière céramique, chauffé par des moyens de chauffage ou d'échange de chaleur sensiblement perpendiculaires à l'axe du réacteur, donc à la direction de l'écoulement des fluides. De manière plus précise, l'invention concerne un réacteur catalytique de forme allongée selon un axe comportant à une première extrémité au moins un moyen d'alimentation en au moins une charge, à l'extrémité opposée au moins un moyen d'évacuation des effluents produits, le réacteur comprenant des moyens de chauffage disposés en nappes sensiblement parallèles déterminant des sections transversales sensiblement perpendiculaires à l'axe du réacteur de façon à définir entre lesdits moyens et/ou les nappes formées par ces moyens, des espaces ou passages pour la circulation de la charge et/ou des effluents, le réacteur étant caractérisé, selon un premier mode de réalisation, en ce qu'il comporte au moins une zone élémentaire (Zᵢ) réactionnelle contenant, selon l'axe, dans la direction de l'écoulement de la charge et/ou des effluents, une chambre de chauffage contenant lesdits moyens de chauffage, suivie d'une chambre de catalyse contenant au moins un catalyseur.

L'alternance de la circulation des gaz dans une zone de chauffage puis dans une zone catalytique permet de dissocier l'ammoniac de manière quasi isotherme et donc d'obtenir de meilleur taux de conversion de l'ammoniac que dans le cas du réacteur adiabatique décrit selon le brevet allemand DE 320 9858.

Le réacteur peut ne contenir qu'une seule zone élémentaire réactionnelle Z comprenant une chambre de chauffage reliée au moyen d'alimentation de la charge et en aval de celle-ci, une chambre de catalyse connectée au moyen d'évacuation de l'effluent notamment lorsque la charge traitée est très diluée en ammoniac.

Selon une autre variante, le réacteur peut comporter une pluralité de zones réactionnelles élémentaires Zᵢ, i étant avantageusement compris entre 1 et 10, disposées en série selon l'axe, la chambre catalytique de la zone Zᵢ₋₁ en amont étant adjacente à la chambre de chauffage de cette zone Zᵢ en aval. La température de la chambre de chauffage de cette zone Zᵢ est avantageusement supérieure à celle de la zone Zᵢ₋₁ en amont qui est à son tour supérieure à celle de la zone Zᵢ₋₂, encore plus en amont, et ainsi de suite.

Du catalyseur peut aussi être introduit dans une partie au moins des espaces définis entre les moyens de chauffage de la chambre de chauffage, de préférence dans ceux de température au moins égale à 600 °C.

La longueur des zones ainsi que leur nombre dépendent de la concentration en ammoniac de la charge et du taux de conversion choisi.

Selon un deuxième mode de réalisation du dispositif, le réacteur catalytique peut comporter des moyens de chauffage disposés en nappes sensiblement parallèles déterminant des sections transversales sensiblement perpendiculaires à l'axe du réacteur, de façon à définir entre lesdits moyens et/ou les nappes formées par ces moyens des espaces ou passages pour la circulation de la charge ou des effluents. Ces espaces sont remplis d'au moins un catalyseur.

Selon ces deux modes de réalisation du dispositif, chaque section transversale de chauffage peut comprendre au moins un moyen de chauffage ou d'échange de chaleur.

Ils peuvent être remplis de catalyseur sur toute la longueur du réacteur mais comme il n'y a pas de conversion à basse température, il est avantageux que, seuls, les espaces se trouvant dans une gamme de température au moins égale à 600 °C, contiennent le catalyseur. De préférence, les espaces à une température supérieure à 900 °C seront remplis de catalyseur. On réalise ainsi de substantielles économies.

Selon ce deuxième mode de réalisation, il n'y a plus de zone adiabatique de catalyse contrairement au premier mode. Le profil de température peut être croissant avec ou sans palier.
Il peut être avantageux de disposer au moins une cloison en matériau réfractaire sensiblement parallèle à l'axe du réacteur de façon à diviser le flux. Ainsi, cette cloison participe à l'échange radiatif.
On définit ainsi au moins deux canaux sensiblement parallèles dans lesquels sont disposées lesdites zones élémentaires réactionnelles ou lesdits moyens de chauffage lorsque l'espace entre ces moyens de chauffage contiennent le catalyseur.

Les moyens de chauffage constituent généralement dans les espaces ou passages des nappes transversales successives indépendantes et sensiblement perpendiculaires à l'axe du réacteur. Selon une caractéristique du réacteur, les moyens de chauffage peuvent comporter des gaines dans lesquelles sont disposées des résistances électriques. Cette réalisation est par exemple celle décrite dans le brevet Français FR2662158 A. Selon ce même brevet, dans l'espace intérieur entre les gaines et les résistances électriques, peut circuler un gaz contenant de l'hydrogène, de l'azote, de la vapeur d'eau ou un mélange de ces produits, à une pression généralement supérieure à la pression du gaz réactionnel au sein du réacteur.

Selon une autre variante, les moyens de chauffage peuvent être au moins un moyen d'échange de chaleur comprenant un tube, formé d'au moins une enveloppe, connecté à un moyen d'alimentation en gaz ou mélange de gaz d'échange de chaleur adapté à échanger de la chaleur avec le ou les réactifs (effluents) circulant à l'extérieur du moyen d'échange de chaleur. Ce dernier comporte généralement au moins une évacuation à l'extérieur du réacteur du gaz ou mélange de gaz ayant échangé de la chaleur avec le ou les effluents. Avantageusement, ce moyen d'échange de chaleur communique avec un brûleur à gaz raccordé à des moyens d'alimentation en gaz combustible et en gaz comburant, comme décrit dans les brevets FR2616518 A, FR2616520 A et FR2715583 A.

Des moyens d'asservissement et de modulation du chauffage électrique ou au moyen de gaz chaud sont en général reliés à la chambre de chauffage de chaque zone élémentaire, plus généralement à chaque section transversale de chauffage dont les espaces de circulation des fluides contiennent le catalyseur.

Selon l'une des caractéristiques de l'invention, les chambres de chauffage sont alimentées de façon indépendante en énergie électrique ou en gaz chaud, soit isolément, soit par rangées transversales, soit encore par petits groupes, de façon à définir des sections de chauffage le long des chambres de chauffage et à pouvoir ainsi moduler la quantité d'énergie fournie tout au long de cette zone.

La modulation de ces sections de chauffage peut être réalisée de façon classique ; les éléments chauffants, dans le cas d'un chauffage électrique, correspondant aux sections précitées sont en général alimentés par des ensembles modulateurs à thyristors. Des transformateurs permettent éventuellement d'adapter les tensions a priori, alors que les modulateurs permettent le réglage fin et continu de la puissance injectée.

Afin de permettre la régulation de l'ensemble, chaque section de chauffage peut être munie d'une canne pyrométrique à thermocouple adaptée au niveau de température ; ces cannes sont disposées dans les espaces où circule la charge, les informations sont transmises au régulateur qui commande le modulateur à thyristor dans le cas d'un chauffage électrique.

Le profil de température dans chaque zone de chauffage est généralement croissant tandis que la zone catalytique est sensiblement adiabatique. Dans le cas où les espaces entre sections de chauffage contiennent du catalyseur, le profil de température peut être croissant avec ou sans palier et il n'y a plus de zone adiabatique.

L'énergie électrique fournie à cette première chambre de chauffage est telle qu'elle génère un fort gradient de température qui permet d'avoir une température moyenne de la charge, sur la chambre de chauffage considérée relativement élevée, ce qui est favorable à la réaction de conversion.

L'invention concerne aussi l'utilisation d'un réacteur catalytique selon l'invention dans un procédé intégré d'élimination de l'hydrogène sulfuré et de l'ammoniac contenus dans un gaz, ce dernier pouvant contenir de l'acide cyanhydrique.

Il est connu une unité de type Claus pour éliminer le soufre comprenant un brûleur (B) recevant la charge contenant de l'hydrogène sulfuré et de l'air et disposé à l'entrée de la chambre de combustion (CC) de l'unité Claus. En aval de la chambre, se situe une chaudière (Ch) pour récupérer l'énergie emmagasinée de la combustion. Les effluents de la chaudière sont refroidis dans un condenseur à soufre Ci et le soufre est récupéré. Les effluents gazeux du condenseur sont introduits dans au moins un dispositif (Di), comprenant un réchauffeur (Ri) d'effluent suivi d'un lit catalytique Claus (CRi) suivi à son tour d'un condenseur (Ci) à soufre récupérant le soufre solide de l'effluent débarrassé du soufre. Ce dernier effluent peut être envoyé enfin dans une unité TGT de traitement de gaz de queue de Claus.

Selon l'invention, le gaz à traiter contenant H₂S, NH₃ et H₂O, éventuellement débarrassé de l'eau qu'il contient dans un strippeur S et préchauffé par de la vapeur, est introduit dans le réacteur catalytique (F) de craquage (de dissociation) selon l'invention.
L'effluent gazeux de craquage, sensiblement débarrassé de l'ammoniac et à très haute température, peut être introduit au moins en partie :
1- soit à l'alimentation du brûleur (B) de l'unité Claus.
   Cette solution permet de limiter les éventuels appoints de fuel gaz tout en récupérant la chaleur délivrée par le réacteur F au niveau de la chaudière (Ch) ;
2- soit en sortie de la chambre de combustion CC de l'unité Claus.
   Cette solution permet de récupérer la chaleur délivrée par le réacteur F au niveau de la chaudière Ch et surtout d'éviter la combustion de l'hydrogène produit par la dissociation de l'ammoniac et donc de limiter la dilution du gaz alimentant les lits catalytiques Claus (CRi), ce qui améliorera le rendement en soufre de ces lits ;
3- soit au niveau des réchauffeurs (Ri) des dispositifs (Di), à l'entrée des lits catalytiques (CRi).
   Cette solution permet de réduire les coûts opératoires de l'unité Claus et de simplifier sa conception (le réchauffeur pouvant alors être remplacé par un simple mélange avec le gaz chaud). Elle permet comme la précédente d'éviter la combustion de l'hydrogène produit par le dissociation de l'ammoniac.

L'effluent chaud du réacteur F de dissociation peut aussi être introduit, une fois refroidi, à l'entrée de l'unité de traitement du gaz de queue de Claus (TGT).

Cette solution ainsi que les solutions 2 et 3 permettent, lorsque le TGT est un procédé incorporant une étape d'hydrogénation (procédé SCOT par exemple) de simplifier cette étape et de réduire la consommation de fuel gaz nécessaire à la production d'hydrogène, puisqu'on utilise celui produit par la dissociation de l'ammoniac. Elles sont rendues possibles par le fait que les hydrocarbures, généralement présents à l'état de trace (-1 % volume), ont été transformés en H₂, CO, CO₂ dans le four F catalytique de dissociation.

L'invention sera mieux comprise au vu des figures illustrant de manière schématique le procédé et le dispositif parmi lesquelles :
- les figures 1 et 2 représentent une coupe longitudinale d'un réacteur selon l'axe des gaines,
- la figure 3 illustre un détail de réalisation de la chambre de chauffage qui est alimentée par ailleurs par un gaz de gaine, et
- les figures 4 et 5 illustrent un autre mode de réalisation du dispositif dans lequel les espaces entre les éléments de chauffage transversaux contiennent du catalyseur.

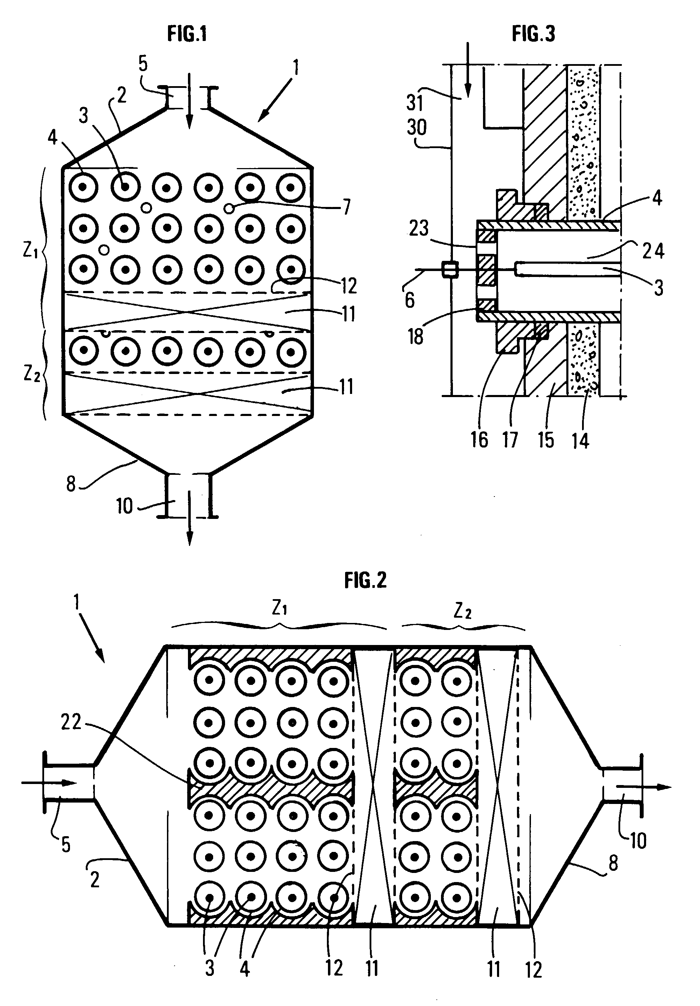

Sur la figure 1, on a représenté, selon un mode de réalisation, un réacteur (1) en matière céramique, vertical, de forme allongée et de section rectangulaire, comprenant un distributeur (2) permettant d'alimenter par un orifice d'entrée (5) le réacteur en mélange gazeux réactionnel. Ce dernier, qui contient un mélange de vapeur d'eau, de SO₂ et de NH₃, a été préchauffé dans une zone de préchauffage conventionnelle, non représentée sur la figure, de préférence par convection. Le réacteur comporte deux zones élémentaires réactionnelles Z₁ et Z₂ en série, chacune d'elles comprenant une chambre de chauffage et une chambre catalytique dont la longueur peut varier d'une zone élémentaire réactionnelle à l'autre. Chaque chambre de chauffage du réacteur comprend une pluralité de moyens de chauffage électrique (3) entourés de gaines (4) disposées en nappes parallèles et formant dans un plan (plan de la figure) un faisceau à pas carré. Ces nappes définissent des sections de chauffage transversales sensiblement perpendiculaires à l'axe du réacteur défini selon la direction d'écoulement de la charge, chacune des sections transversales de chauffage comprenant au moins un moyen de chauffage.
Ces sections de chauffage sont alimentées en énergie électrique, de façon indépendante, grâce à une paire d'électrodes non représentées, des sondes pyrométriques à thermocouple (7) sont logées dans les espaces où circule la charge entre les gaines (4) et permettent de réguler automatiquement la température de chaque section de chauffage, par un dispositif classique de régulation et de modulation non représenté sur la figure. Dans la première chambre de chauffage, les gaines sont chauffées de façon à ce que la température de la charge passe rapidement de 150 - 300 °C (température de préchauffage) à 1 100 °C environ.
Les nappes parallèles peuvent former dans un plan (plan de la figure) un faisceau à pas carré, comme il est montré sur la figure 1. On a représenté, sur cette figure 1, 6 nappes parallèles de chauffage qui définissent 4 sections de chauffage transversales. Ces nombres peuvent varier en fonction de la concentration et surtout des débits de gaz à traiter.

Faisant suite à la première chambre de chauffage de la première zone élémentaire réactionnelle permettant de chauffer la charge par exemple jusqu'à 1100 °C, on dispose une première chambre catalytique (11) contenant par exemple du catalyseur sous forme d'un nid d'abeille tel que celui décrit dans le brevet EP27069 A, entre deux grilles (12) percées d'orifices par lesquels s'introduit la charge chauffée à 1 100 °C dans la zone catalytique.

La température chute alors vers 1 000 °C après la traversée de la première chambre de catalyse. Une deuxième chambre de chauffage, correspondant à la deuxième zone élémentaire réactionnelle Z₂ adjacente à la première chambre de catalyse, permet d'amener l'effluent à une température de 1 250 °C environ. Cette température descend vers 1 200 °C à la sortie de la deuxième chambre de catalyse.

L'effluent récupéré, ne contenant sensiblement plus d'ammoniac, est collecté dans la partie inférieure (8) du réacteur (1) et évacué par un orifice de sortie (10). Il contient essentiellement de l'hydrogène sulfuré, de l'hydrogène et de l'azote.

Sur la figure 2, on a représenté, selon un autre mode de réalisation, un réacteur (1) de forme allongée et de section rectangulaire avec les mêmes références que celles de la figure 1. Il comporte des gaines (4) disposées en nappes parallèles définissant des sections transversales perpendiculaires à l'axe du réacteur et formant dans un plan (plan de la figure) un faisceau à pas carré. Plusieurs nappes sont séparées par une paroi (22) en matière céramique, sensiblement parallèle à l'axe définissant dans ce cas précis deux canaux. Ces parois ont une forme, adaptée à créer des turbulences, comportant des alvéoles au niveau de chaque gaine (4). Les parois du réacteur peuvent par ailleurs comporter des alvéoles comme indiqué sur la figure.

La figure 3 représente pour le réacteur les mêmes éléments que ceux décrits en liaison avec la figure 1 ou 2 ; on a représenté, selon la figure 3, un boîtier de protection (30) comportant à une extrémité un orifice (31) par lequel on introduit le gaz G contenant par exemple de l'azote. Un autre orifice muni d'une vanne non représentée à l'autre extrémité permet de réguler le flux de ce gaz G. Ce boîtier (30) est fixé sur l'armature métallique du réacteur (1) et entoure l'ensemble des résistances électriques et des gaines les contenant, à l'exception de l'extrémité des résistances électriques par où se fait l'alimentation en énergie électrique. Les résistances (3), en épingle, sont positionnées dans les gaines (4) à l'aide de rondelles (18), par exemple en fibre céramique, comportant des passages (23) permettant au gaz G, par exemple de l'azote, de pénétrer dans l'espace (24) compris entre les résistances et les gaines.

La circulation du gaz G est effectuée en légère surpression par rapport à la pression du gaz réactionnel au sein du réacteur, assurant ainsi une atmosphère parfaitement contrôlée et une meilleure diffusion de ce gaz G vers l'espace de circulation des gaz réactionnels.

La différence de pression absolue entre l'espace des résistances et l'espace de circulation des gaz réactionnels, ou surpression, sera de préférence telle que la pression dans l'espace des résistances soit supérieure d'au moins 0,1 % et le plus souvent d'au moins 1 % à la pression dans l'espace réactionnel. Il n'est pas nécessaire d'avoir une très grande surpression et le plus souvent la pression dans l'espace des résistances reste inférieure à 2 fois la pression dans l'espace de circulation des gaz réactionnels.

La figure 3 représente aussi un détail d'un mode de réalisation de la zone de chauffage suivant l'invention. On utilise comme moyen de chauffage électrique des résistances (3) de forme cylindrique. Ces résistances comportent à chacune de leur extrémité des zones froides et une partie de la zone centrale qui est la zone chaude représentant par exemple environ 68 % de la longueur totale.

On réalise un réacteur de section rectangulaire, dont les parois sont constituées de béton réfractaire isolant (14) et par une armature métallique (15). On perce dans deux parois latérales opposées un trou circulaire, dans lequel on fait passer une gaine (4), par exemple en céramique, de diamètre double de celui de la résistance électrique (3). La gaine (4) est positionnée au moyen d'un système presse-étoupe (16) agissant dans une gorge au niveau de l'armature métallique sur une tresse en matière réfractaire (17), par exemple une tresse en matière céramique. Le positionnement de la résistance (3) dans la gaine (4) est effectué au moyen de rondelles (18), par exemple en fibre céramique, comportant les orifices (23) permettant le passage du gaz G, contenant par exemple de l'azote, introduit dans le boîtier (30) par le conduit (31) dans l'espace (24) des résistances.

La zone chaude de la résistance (3) alimentée par une paire d'électrodes (6) dont les extrémités dépassent du boîtier (30), est positionnée de façon à ce qu'elle ne pénètre pas dans l'orifice de passage à travers la paroi de béton isolant. Il n'est pas indispensable d'utiliser une tresse (17) au niveau du presse-étoupe puisque celui-ci a, dans le cadre de l'invention, le rôle de moyen de positionnement et qu'il n'a pas pour but principal d'assurer une étanchéité aussi parfaite que possible entre l'intérieur et l'extérieur du réacteur. Ce presse-étoupe peut d'ailleurs avantageusement être remplacé par un moyen plus simple de positionnement des gaines tel que par exemple des simples rondelles en matériau réfractaire.

On dispose ainsi d'un certain nombre de résistances chauffantes gainées dans des parois, par exemple en matière céramique, par rangées horizontales successives, ces rangées étant de préférence alignées de façon à ce que, sur les parois latérales du four, elles forment un faisceau à pas carré ou rectangulaire. Le boîtier (30), dont dépassent seulement les extrémités des résistances et/ou leur alimentation électrique (6), est parcouru par le courant de gaz G contenant par exemple de l'azote qui circule ainsi à l'intérieur des gaines.

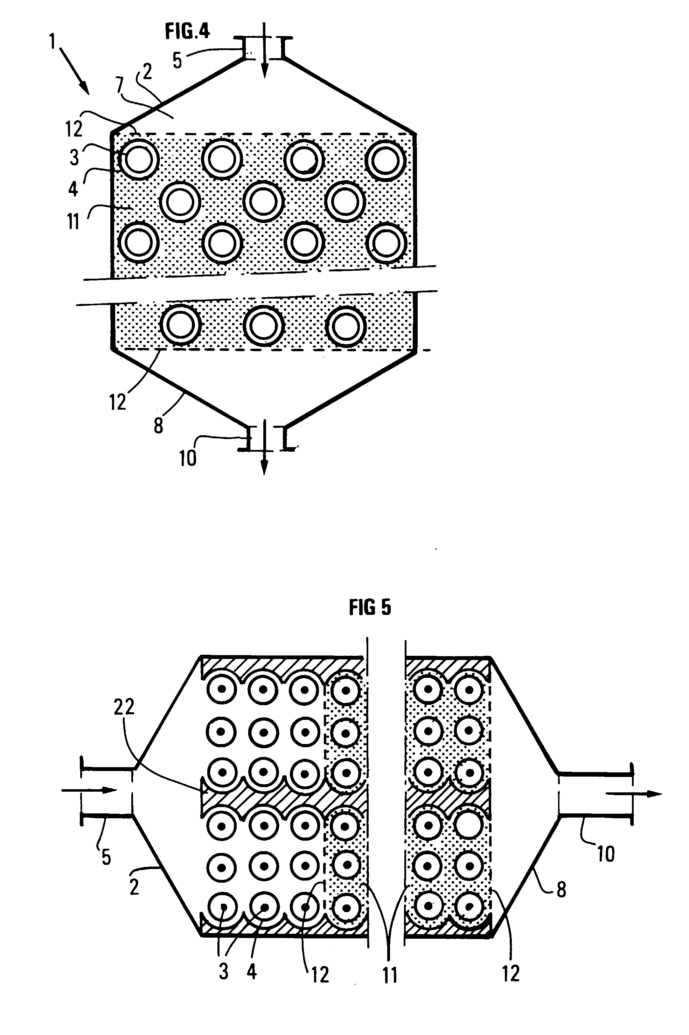

Selon la figure 4 correspondant au second mode de réalisation du dispositif, le réacteur comprend les mêmes organes de chauffage, avec les mêmes références que celles de la figure 1, à la différence près que tous les espaces compris entre les diverses gaines par lesquels s'écoulent la charge et les effluents contiennent au moins un catalyseur soutenu par des grilles 12.

La figure 5 reprend les mêmes organes de chauffage que la figure 2 avec une division du flux par une cloison 22. En revanche, le catalyseur est disposé dans les espaces entre les gaines de chauffage 4, et soutenu par des grilles 12. Seule la partie de la zone de chauffage, à une température supérieure à 600 °C par exemple, contient du catalyseur avec un profil de température croissant du haut vers le bas.

### Les exemples suivants illustrent l'invention.

### Exemple 1:

On utilise un réacteur horizontal de section rectangulaire ayant les dimensions internes suivantes : 0,5 m x 1 m et dont la longueur est de 4,3 mètres. Les moyens de chauffage de ce réacteur sont constitués par des résistances électriques en épingle, en bisiliciure de molybdène (MoSi₂) ; ces résistances sont entourées de gaines en céramique, disposées concentriquement par rapport au centre du cercle englobant les résistances.

Ces gaines sont en carbure de silicium. Chaque gaine, fermée à une extrémité, entoure 2 résistances en épingle. Ces gaines sensiblement parallèles entre elles sont disposées perpendiculairement au sens de circulation de la charge. La longueur de chaque branche de l'épingle de la résistance électrique est de 90 cm et le diamètre de la résistance est de 9 mm. Les gaines de céramique ont une longueur de 100 cm, un diamètre extérieur de 32 cm et un diamètre intérieur de 30 cm.

Le réacteur comprend trois zones élémentaires réactionnelles :
- la première chambre de chauffage comprend quatre sections transversales, régulées indépendamment, chacune d'elles comportant une gaine de chauffage contenant de l'azote comme gaz de gaine. La longueur de cette chambre de chauffage est de 1,8 m. La température est portée à 1 100 °C ;
- la première chambre de catalyse, de longueur égale à 0,3 m, contient un catalyseur préparé selon le brevet EP27069 A (exemple 2), de composition pondérale suivante :
   platine : 0,09 % ; rhodium : 0,009 %, fer : 1 % et cérium : 3,5 %.
   La température de l'effluent qui en sort est de 1 000 °C.
- La seconde chambre de chauffage ne contient qu'une seule gaine de chauffage, et a une longueur de 0,6 m. La température est remontée à 1 180 °C.
- La seconde chambre de catalyse contient le même catalyseur et a une longueur de 0,3 m. La température de l'effluent qui en sort est de 1 100 °C ;
- La troisième chambre de chauffage ne contient qu'une seule gaine de chauffage et a une longueur de 0,6 m. La température finale est de 1 240 °C.
- La troisième chambre de catalyse contient le même catalyseur et a une longueur de 0,7 m. La température de l'effluent qui sort du réacteur est de 1200 °C.

La longueur totale des chambres de catalyse est de 1,3 m.
Le temps de séjour est déterminé à partir du volume total des chambres de catalyse.

On introduit une charge comprenant 56,4 % poids d'hydrogène sulfuré, 18,2 % poids d'ammoniac et 25,4 % poids d'eau à un débit de 241 kg/h de manière à ce que le temps de séjour à la température et à la pression opératoire 0,11 MPa soit de 2 secondes. Les résultats du craquage catalytique de l'ammoniac à 1 200 °C selon l'invention et à 900 °C à titre comparatif sont présentés dans le tableau ci-après.

| Temps | T 1200 °C | | T 900 °C | |
|---|---|---|---|---|
| | % craquage NH₃ | % craquage H₂S | % craquage NH₃ | % craquage H₂S |
| 10 min | 99,65 | 1 % | 99,5 | 1 % |
| 90 min | 99,65 | 1 % | 50 | 1 % |
| 5 heures | 99,65 | 1 % | 0 | 1 % |
| 2 000 heures | 99,65 | 1 % | | |

La comparaison des résultats montre que le catalyseur continue de fonctionner tout à fait normalement. Il ne nécessite donc pas d'être régénéré.

### Exemple 2

Le réacteur de dimension interne suivante 1,2 m x 1 m et de longueur de 3,5 m comprend les mêmes gaines que celles de l'exemple 1 mais disposées sur deux rangées entre les parois.

Le réacteur comprend deux zones :
- la première zone qui est la chambre de préchauffage comprend six gaines de chauffage, régulées deux par deux, chaque gaine de chauffage contenant de l'azote comme gaz de gaine. La longueur de cette chambre de chauffage est de 1,5 m. La température est portée à 950 °C ;
- la deuxième zone de longueur égale à 2 m, délimitée par deux grilles comprend six gaines de chauffage régulées deux par deux. Dans le sens de la largeur l'écart entre gaines et entre gaine et paroi est de 18,7 cm et dans le sens de la longueur l'écart entre gaines et entre gaines et grilles est de 26 cm. Ces écarts ont été choisis de manière que le temps de séjour à la température et à la pression opératoire de 0,11 MPa soit de 2 secondes. Avant la pose de la voute du réacteur, du catalyseur à base de cobalt et de molybdène est versé entre les grilles de manière à remplir les espaces vides.

On introduit une charge comprenant 56,4 % poids d'hydrogène sulfuré, 18,2 % poids d'ammoniac et 25,4 % poids d'eau à un débit de 482 kg/h de manière que le temps de séjour à la température et à la pression opératoire 0,11 MPa soit de 2 secondes. La température de l'effluent qui sort du réacteur est de 1 220 °C.

Les résultats du craquage catalytique de l'ammoniac à 1 220 °C selon l'invention et à 900 °C à titre comparatif sont présentés dans le tableau ci-après.

| Temps | T 1 220 °C | | T 900 °C | |
|---|---|---|---|---|
| | % craquage NH₃ | % craquage H₂S | % craquage NH₃ | % craquage H₂S |
| 10 min | 99,85 | 1 % | 99,5 | 1 % |
| 90 min | 99,85 | 1 % | 50 | 1 % |
| 5 heures | 99,85 | 1 % | 0 | 1 % |
| 2 000 heures | 99,85 | 1 % | | |

La comparaison des résultats montre que le catalyseur continue de fonctionner tout à fait normalement. Il ne nécessite donc pas d'être régénéré, selon cette variante.

L'effluent gazeux ainsi obtenu peut être introduit dans une unité Claus.

## Revendications

1. Procédé de craquage catalytique d'ammoniac présent dans un fluide contenant de l'hydrogène sulfuré, dans lequel on introduit le fluide dans une zone réactionnelle chauffée entre 1 000 à 1 400 °C comportant un catalyseur approprié, et on récupère un effluent de craquage catalytique, caractérisé en ce que la zone réactionnelle est chauffée par des moyens de chauffage ou d'échange de chaleur disposés à l'intérieur de ladite zone réactionnelle.

2. Procédé selon la revendication 1 dans lequel la température de la zone réactionnelle est de 1 150 à 1 250 °C.

3. Procédé selon les revendications 1 ou 2, dans lequel la pression dans la zone réactionnelle est sensiblement celle du fluide y entrant de préférence comprise entre 1,05 et 5 bar absolus et le débit d'injection est tel que le temps de séjour dans la zone réactionnelle catalytique est compris entre 0,1 et 100 secondes et de préférence compris entre 0,5 et 10 secondes.

4. Procédé selon l'une des revendications 1 à 3 dans lequel le fluide est un gaz.

5. Procédé selon l'une des revendications 1 à 3 dans lequel le fluide contient de l'eau.

6. Procédé selon l'une des revendications 1 à 5 dans lequel le fluide est au moins un effluent choisi dans le groupe formé par les effluents de tête d'un dispositif d'entraînement à la vapeur d'une eau résiduaire de raffinerie, les effluents de gazéification de charbon, les effluents de cokerie et les biogaz.

7. Procédé selon l'une des revendications 1 à 6 dans lequel le catalyseur est choisi dans le groupe formé par au moins un métal noble du groupe VIII, au moins un métal du groupe VII B, au moins un métal du groupe VII B en mélange avec au moins un métal du groupe VIII, au moins un métal du groupe VIII, au moins un métal du groupe VI B, au moins un métal non noble du groupe VIII en mélange avec au moins un métal du groupe VI B et au moins un métal non noble du groupe VIII avec au moins un métal noble du groupe VIII.

8. Procédé selon l'une des revendication 1 à 7 dans lequel on utilise une zone réactionnelle en matière céramique.

9. Procédé selon l'une des revendications 1 à 8 dans lequel la zone réactionnelle comporte des moyens de chauffage disposés en nappe sensiblement parallèles déterminant des sections transversales sensiblement perpendiculaires à l'axe de ladite zone réactionnelle de façon à définir entre lesdits moyens et/ou les nappes formées par ces moyens des espaces ou passages pour la circulation de la charge ou des effluents, les espaces se trouvant dans une gamme de température au moins égale à 600 °C, de préférence supérieure à 900 °C, contenant le catalyseur.

10. Procédé selon l'une des revendications 1 à 8 dans lequel la zone réactionnelle comprend au moins une zone élémentaire Zᵢ réactionnelle dans la direction de l'écoulement du fluide contenant une chambre de chauffage du fluide suivie d'une chambre de catalyse du fluide chauffé.

11. Procédé selon la revendication 10 dans lequel la zone réactionnelle comporte une pluralité de zones élémentaires réactionnelles Zᵢ, la température de la chambre de chauffage de la zone Zᵢ en aval étant de préférence supérieure à celle de la chambre de chauffage de la zone Zᵢ₋₁ en amont.

12. Procédé selon l'une des revendications 1 à 11 dans lequel au moins une cloison sensiblement parallèle à l'axe, définit au moins deux canaux dans lesquels sont disposés lesdits moyens de chauffage définissant les espaces ou passages.

13. Réacteur catalytique pour la mise en oeuvre du procédé selon l'une des revendications 1 à 12, en matériau réfractaire, de forme allongée selon un axe, comportant à une première extrémité au moins un moyen d'alimentation en au moins une charge à l'extrémité opposée au moins un moyen d'évacuation des effluents produits, le réacteur comprenant des moyens de chauffage disposés en nappes sensiblement parallèles déterminant des sections transversales sensiblement perpendiculaires à l'axe du réacteur de façon à définir entre lesdits moyens et/ou les nappes formées par ces moyens, des espaces ou passages pour la circulation de la charge et/ou des effluents, le réacteur étant caractérisé en ce qu'il comporte au moins une zone élémentaire (Zᵢ) réactionnelle contenant, selon l'axe, dans la direction de l'écoulement de la charge et/ou des effluents, une chambre de chauffage contenant lesdits moyens de chauffage, suivie d'une chambre de catalyse contenant au moins un catalyseur.

14. Réacteur selon la revendication 13 dans lequel une pluralité de zones élémentaires réactionnelles Zᵢ est disposée selon l'axe, la chambre catalytique de la zone Zᵢ₋₁ en amont étant adjacente à la chambre de chauffage de la zone Zᵢ en aval.

15. Réacteur catalytique selon l'une des revendications 13 à 14, dans lequel la chambre de catalyseur comprend des moyens de chauffage.

16. Réacteur selon l'une des revendications 13 à 15 dans lequel des moyens d'asservissement et de modulation du chauffage sont reliés aux moyens de chauffage.

17. Réacteur selon l'une des revendications 13 à 16 dans lequel les moyens de chauffage comportent des gaines dans lesquelles sont disposées des résistances électriques.

18. Réacteur selon l'une des revendications 13 à 16 dans lequel les moyens de chauffage consistent en des moyens d'échange de chaleur alimentés en gaz ou mélange de gaz d'échange de chaleur.

19. Réacteur selon l'une des revendications 13 à 17, dans lequel les gaines contiennent un gaz de gaine.

20. Réacteur selon l'une des revendications 15 à 19 dans lequel les espaces entre les moyens de chauffage dans la chambre de chauffage contiennent le catalyseur.

21. Réacteur selon l'une des revendications 13 à 20, dans lequel au moins une cloison sensiblement parallèle à l'axe définit au moins deux canaux dans lesquels sont disposés les moyens de chauffage et/ou le catalyseur.

22. Utilisation du réacteur selon l'une des revendications 13 à 21 dans un procédé intégré d'élimination de l'hydrogène sulfuré, de l'ammoniac et éventuellement de l'acide cyanhydrique contenus dans un gaz.

## Patentansprüche

1. Verfahren zum katalytischen Cracken von Ammoniak, der in einem Schwefelwasserstoff enthaltenden Fluid vorhanden ist, bei dem man das Fluid in eine Reaktionszone einführt, die zwischen 1000 und 1400°C erwärmt ist und einen geeigneten Katalysator umfaßt und man einen Abstrom des katalytischen Crackens gewinnt, dadurch gekennzeichnet, daß die Reaktionszone erwärmt wird durch Heiz- oder Wärmeaustauschmittel, die im Innern dieser Reaktionszone angeordnet sind.

2. Verfahren nach Anspruch 1, bei dem die Temperatur der Reaktionszone zwischen 1 150 und 1 250°C liegt.

3. Verfahren nach einem der Ansprüche 1 oder 2, bei dem der Druck in der Reaktionszone im wesentlichen der des hierin eintretenden Fluids ist und bevorzugt zwischen 1,05 und 5 bar absolut liegt und der Injektionsdurchsatz derart ist, daß die Verweilzeit in der katalytischen Reaktionszone zwischen 0,1 und 100 Sekunden und bevorzugt zwischen 0,5 und 10 Sekunden liegt.

4. Verfahren nach einem der Ansprüche 1 bis 3, bei dem das Fluid ein Gas ist.

5. Verfahren nach einem der Ansprüche 1 bis 3, bei dem das Fluid Wasser enthält.

6. Verfahren nach einem der Ansprüche 1 bis 5, bei dem das Fluid wenigstens ein Abstrom ist, der gewählt ist aus der Gruppe, der durch die Kopfabströme einer Dampfmitreißevorrichtung eines Raffinerierestwassers, die Kohlevergasungsabströme, die Kokereiabströme und die Biogase gebildet ist.

7. Verfahren nach einem der Ansprüche 1 bis 6, bei dem der Katalysator gewählt ist aus der Gruppe, welche durch wenigstens ein Edelmetall der Gruppe VIII, wenigstens ein Metall der Gruppe VII B, wenigstens ein Metall der Gruppe VII B im Gemisch mit wenigstens einem Metall der Gruppe VIII, wenigstens ein Metall der Gruppe VIII, wenigstens ein Metall der Gruppe VI B, wenigstens ein nicht edles Metall der Gruppe VIII im Gemisch mit wenigstens einem Metall der Gruppe VI B und wenigstens ein nicht edles Metall der Gruppe VIII mit wenigstens einem Edelmetall der Gruppe VIII gebildet ist.

8. Verfahren nach einem der Ansprüche 1 bis 7, bei dem man eine Reaktionszone aus Keramikmaterial verwendet.

9. Verfahren nach einem der Ansprüche 1 bis 8, bei dem die Reaktionszone Heizmittel umfaßt, die in im wesentlichen parallelen Bahnen angeordnet sind, welche Querabschnitte bilden, die im wesentlichen senkrecht zur Achse dieser Reaktionszone liegen, derart, daß zwischen diesen Mitteln und/oder den durch diese Mittel gebildeten Bahnen, Räume oder Durchlässe für die Zirkulation der Charge oder der Abströme definiert werden, wobei die Räume sich in einem Temperaturbereich befinden, der wenigstens gleich 600°C bevorzugt höher als 900°C liegt und den Katalysator enthält.

10. Verfahren nach einem der Ansprüche 1 bis 8, bei dem die Reaktionszone wenigstens eine elementare Reaktionszone Zᵢ in Strömungsrichtung des Fluids umfaßt, eine Heizkammer für das Fluid, gefolgt von einer Katalysekammer für das erwärmte Fluid enthaltend.

11. Verfahren nach Anspruch 10, bei dem die Reaktionszone eine Vielzahl von Reaktionselementarzonen Zᵢ umfaßt, wobei die Temperatur der Heizkammer der Zone Zᵢ abströmseitig bevorzugt größer als die der Heizkammer der anströmseitigen Zone Zᵢ₋₁ ist.

12. Verfahren nach einem der Ansprüche 1 bis 11, bei dem wenigstens eine im wesentlichen zur Achse parallele Trennwand wenigstens zwei Kanäle definiert, in denen die diese Räume oder Durchlässe definierenden Heizmittel angeordnet sind.

13. Katalytischer Reaktor zur Durchführung des Verfahrens nach einem der Ansprüche 1 bis 12, aus feuerfestem Material, mit einer längs einer Achse länglichen Gestalt, an einem ersten Ende wenigstens einem Mittel zur Speisung mit wenigstens einer Charge, am gegenüberliegenden Ende wenigstens einem Mittel zum Ziehen der erzeugten Abströme, wobei der Reaktor Heizmittel umfaßt, die in im wesentlichen parallelen Bahnen angeordnet sind, welche Querabschnitte im wesentlichen senkrecht zur Achse des Reaktors derart bilden, daß zwischen diesen Mitteln und/oder den durch diese Mittel gebildeten Bahnen Räume oder Durchlässe für die Zirkulation der Charge und/oder der Abströme gebildet werden, wobei der Reaktor sich dadurch auszeichnet, daß er wenigstens eine Reaktionselementarzone (Zᵢ) umfaßt, die längs der Achse in Strömungsrichtung der Charge und/oder der Abströme eine Heizkammer enthält, welche die Heizmittel, gefolgt von einer Katalysekammer, enthält, welche wenigstens einen Katalysator enthält.

14. Reaktor nach Anspruch 13, bei dem eine Vielzahl von Reaktionselementarzonen Zᵢ gemäß der Achse angeordnet ist, wobei die katalytische Kammer der anströmseitigen Zone Zᵢ₋₁ benachbart der Heizkammer der abströmseitigen Zone Zᵢ ist.

15. Katalytischer Reaktor nach einem der Ansprüche 13 bis 14, bei dem die Katalysatorkammer Heizmittel umfaßt.

16. Reaktor nach einem der Ansprüche 13 bis 15, bei dem die Mittel zur Zuordnung/Steuerung und Modulation der Heizung mit den Heizmitteln verbunden sind.

17. Reaktor nach einem der Ansprüche 13 bis 16, bei dem die Heizmittel Hüllen umfassen, in welchen elektrische Widerstände angeordnet sind.

18. Reaktor nach einem der Ansprüche 13 bis 16, bei dem die Heizmittel aus Wärmeaustauschermitteln bestehen, welche mit Gas oder einem Gasgemisch für den Wärmeaustausch gespeist sind.

19. Reaktor nach einem der Ansprüche 13 bis 17, bei dem die Hüllen ein Hüllgas enthalten.

20. Reaktor nach einem der Ansprüche 15 bis 19, bei dem die Räume zwischen den Heizmitteln in der Heizkammer den Katalysator enthalten.

21. Reaktor nach einem der Ansprüche 13 bis 20, bei dem wenigstens eine im wesentlichen parallel zur Achse verlaufende Trennwand wenigstens zwei Kanäle definiert, in denen die Heizmittel und/oder der Katalysator angeordnet sind.

22. Verwendung des Reaktors nach einem der Ansprüche 13 bis 21 bei einem integrierten Verfahren zur Eliminierung von Schwefelwasserstoff, Ammoniak und gegebenenfalls Cyanwasserstoff, die in einem Gas enthalten sind.

## Claims

1. A process for the catalytic cracking of ammonia present in a fluid containing hydrogen sulphide, in which the fluid is introduced into a reaction zone heated to between 1000°C and 1400°C and comprising a suitable catalyst, and a catalytic cracking effluent is recovered, characterized in that the reaction zone is heated by heating or heat exchange means disposed inside said reaction zone.

2. A process according to claim 1, in which the temperature of the reaction zone is 1150°C to 1250°C.

3. A process according to claim 1 or claim 2, in which the pressure in the reaction zone is substantially that of the fluid entering it, preferably in the range 1.05 to 5 bars absolute, and the injected flow rate is such that the residence time in the catalytic reaction zone is in the range 0.1 to 100 seconds, preferably in the range 0.5 to 10 seconds.

4. A process according to any one of claims 1 to 3, in which the fluid is a gas

5. A process according to any one of claims 1 to 3, in which the fluid contains water.

6. A process according to any one of claims 1 to 5, in which the fluid is at least one effluent selected from the group formed by overhead effluents from the steaming apparatus for refinery process water, coal gasification effluents, coke-oven effluents or biogases.

7. A process according to any one of claims 1 to 6, in which the catalyst is selected from the group formed by at least one noble metal from group VIII, at least one metal from group VIIB, at least one metal from group VIIB mixed with at least one metal from group VIII, at least one metal from group VIII, at least one metal from group VIB, at least one non noble metal from group VIII mixed with at least one metal from group VIB and at least one non noble metal from group VIII with at least one noble metal from group VIII

8. A process according to any one of claims 1 to 7, using a reaction zone of ceramic material.

9. A process according to any one of claims 1 to 8, in which the reaction zone comprises heating means disposed in substantially parallel layers determining transverse sections which are substantially perpendicular to the axis of said reaction zone, to define spaces or passages for the circulation of the feed or effluents between said means and/or layers formed by said means, the spaces which are in a range of temperature of at least 600°C, preferably more than 900°C, containing the catalyst.

10. A process according to any one of claims 1 to 8, in which the reaction zone comprises at least one elementary reaction zone Zᵢ in the direction of flow of the fluid, containing a fluid heating chamber followed by a chamber for catalysis of the heated fluid

11. A process according to claim 10, in which the reaction zone comprises a plurality of elementary reaction zones Zᵢ, the temperature of the heating chamber of the downstream zone Zᵢ preferably being higher than that of the heating chamber of the upstream zone Zᵢ₋₁.

12. A process according to any one of claims 1 to 11, in which at least one wall which is substantially parallel to the axis defines at least two channels in which said heating means defining the spaces or passages are disposed.

13. A catalytic reactor for carrying out the process of any one of claims 1 to 12, of refractory material, elongate along one axis, comprising, at a first extremity, at least one means for supplying at least one feed, at least one means for evacuating the effluents produced being provided at the other extremity, the reactor comprising heating means disposed in substantially parallel layers determining transverse sections which are substantially perpendicular to the reactor axis to define spaces or passages for circulation of the feed and/or effluents between said means and/or the layers formed by said means, the reactor being characterized in that it comprises at least one elementary reaction zone (Zᵢ) containing, along the axis, in the direction of flow of the feed and/or effluents, a heating chamber containing said heating means, followed by a catalysis chamber containing at least one catalyst.

14. A reactor according to claim 13, in which a plurality of elementary reaction zones Zᵢ are disposed along the axis, the catalytic chamber of upstream zone Zᵢ₋₁ being adjacent the heating chamber of downstream zone Zᵢ.

15. A catalytic reactor according to claim 13 or claim 14, in which the catalyst chamber comprises heating means

16. A reactor according to any one of claims 13 to 15, in which heating control and modifying means are connected to the heating means.

17. A reactor according to any one of claims 13 to 16, in which the heating means comprise sleeves in which electrical resistors are disposed.

18. A reactor according to any one of claims 13 to 16, in which the heating means consist of heat exchange means supplied with a heat exchange gas or gas mixture.

19. A reactor according to any one of claims 13 to 17, in which the sleeves contain a sleeve gas.

20. A reactor according to any one of claims 15 to 19, in which the spaces between the heating means in the heating chamber contain the catalyst.

21. A reactor according to any one of claims 13 to 20, in which at least one wall which is substantially parallel to the axis defines at least two channels in which the heating means and/or the catalyst are disposed.

22. The use of a reactor according to any one of claims 13 to 21, in an integrated process for the elimination of hydrogen sulphide, ammonia and possibly hydrocyanic acid contained in a gas.
